# EUROPÄISCHE PATENTSCHRIFT

(11) **EP 0 595 239 B1**
(45) Veröffentlichungstag und Bekanntmachung des Hinweises auf die Patenterteilung: **29.12.1997**
(21) Anmeldenummer: 93117276.1
(22) Anmeldetag: 25.10.1993
(51) Int. Cl.: B65G 53/60

(54) **Beschickbehälter für die Aufnahme von feinteiligem oder körnigem Beschickgut**
Feeding hopper for receiving granular or powdery material
Réservoir d'alimentation pour recevoir des produits granuleux ou pulvérulants

(30) Priorität: 28.10.1992 DE 9214620 U
(43) Veröffentlichungstag der Anmeldung: 04.05.1994
(73) Patentinhaber: Vollmar, Hartmut, D-53639 Königswinter (DE)
(72) Erfinder: Vollmar, Hartmut, D-53639 Königswinter (DE)
(74) Vertreter: Honke, Manfred, Dr.-Ing.

(56) Entgegenhaltungen:
- CH-A- 544 023
- DE-A- 2 748 735
- FR-A- 2 134 378
- FR-A- 2 407 154
- US-A- 2 276 805

## Beschreibung

Die Erfindung betrifft einen Beschickbehälter für die Aufnahme von feinteiligem oder körnigem Beschickgut, - mit Befülleinrichtung, trichterförmigem Behälterboden und Auslaufstutzen am Behälterboden, wobei die Befülleinrichtung einerseits einen in den Beschickbehälterinnenraum einmündenden Befüllstutzen und andererseits ein über einen Absaugstutzen angeschlossenes Sauggebläse aufweist.

Bei dem aus der Praxis bekannten Beschickbehälter des vorstehend beschriebenen Aufbaus erfolgt die Befüllung des Beschickbehälterinnenraumes über das Sauggeblässe, d.h. durch Einsaugen des Beschickgutes. Dazu sind im Befüllstutzen, im Absaugstutzen sowie vor dem Sauggebläse Ventile angeordnet, die über eine besondere Steuereinrichtung so gesteuert werden, daß über den Befüllstutzen ein Einfüllen des Beschickgutes erfolgt, aber auch eine Belüftung des Beschickbehälterinnenraumes durchgeführt werden kann. Die bekannten Maßnahmen sind aufwendig, weil sie eine Mehrzahl von Ventilen und Stelltriebe für die Steuerbewegung der Ventile erforderlich machen.

Bei einer bekannten Filteranlage (DE-A-2 748 735) sind im oberen Teil eines Beschickbehälters zwei voneinander unabhängige Filtereinrichtungen vorgesehen, deren Reinluftseiten über jeweils zugeordnete Ventile entweder mit einem Sauggebläse oder mit der Atmosphäre verbindbar sind. Zum Reinigen jeweils eines der Filter wird die Reinluftseite des anderen Filters vom Sauggebläse abgekoppelt und an die Atmosphäre angeschlossen, so daß atmosphärische Luft über die Reinluftseite des Filters in den Behälter eintreten kann, aus dem sie vom Sauggebläse über das andere Filter wieder abgesaugt wird.

Eine andere bekannte Filteranlage für Rauchgase (US-A-2 276 805) weist zwischen zwei Behältern ein steuerbares Ventil auf und zwischen einem Behälter und einem Sauggebläse ein weiteres steuerbares Ventil. Die beiden Ventile werden gegenläufig angesteuert, so daß das sich in dem einen Behälter unter der Wirkung des Sauggebläses einstellende Vakuum schlagartig aufgehoben wird und Luft durch eine mit der Atmosphäre in Verbindung stehende Öffnung auf die Reinseite des Filters strömen kann.

Der Erfindung liegt die Aufgabe zugrunde, einen Beschickbehälter des eingangs beschriebenen Aufbaus so weiter auszubilden, daß auf sehr einfache Weise das Befüllen, aber auch die Belüftung möglich sind und darüber hinaus besondere funktionelle Vorteile erreicht werden.

Diese Aufgabe wird mit einem Beschickbehälter gemäß dem einzigen Patentanspruch gelöst.

Die Erfindung geht von der Erkenntnis aus, daß bei einem Beschickbehälter des eingangs beschriebenen Aufbaus das Befüllen und die Belüftung mit einem einzigen Ventil bewirkt werden können. Arbeitet man nach der Lehre der Erfindung, so wird gleichzeitig erreicht, daß das Sauggebläse bei der Belüftung weiterarbeitet, was von Vorteil ist, weil das Anlaufen und Ablaufen insbesondere von großen Gebläsen sehr aufwendig ist und erfindungsgemäß nicht mehr erforderlich ist. Von Vorteil ist aber auch, daß die Belüftung sehr plötzlich erfolgt. Das bewirkt, daß die flexiblen Filterwände sich gleichsam nach außen aufblähen und abgesetzes Beschickgut freigeben, welches in den Beschickbehälter nach unten fällt. Es versteht sich, daß beim Beschicken von Kunststoff-Schneckenpressen, mehrere erfindungsgemäße Beschickbehälter zu einem Aggregat zusammengefaßt werden können, wobei alle Beschickbehälter des Aggregates an ein einziges Sauggebläse angeschlossen werden.

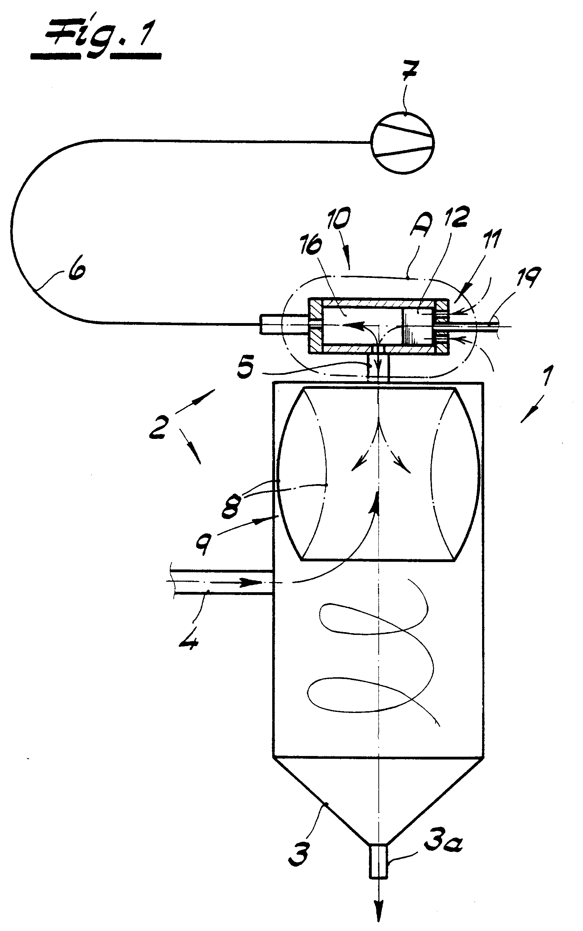

Im folgenden wird die Erfindung anhand einer lediglich ein Ausführungsbeispiel darstellenden Zeichnung ausführlicher erläutert. Es zeigen in schematischer Darstellung
- Fig. 1: einen Vertikalschnitt durch einen erfindungsgemäßen Beschickbehälter,
- Fig. 2: in gegenüber der Fig. 1 wesentlich vergrößertem Maßstab den Ausschnitt A aus dem Gegenstand nach Fig. 1, nämlich das Steuerventil,
- Fig. 3: den Gegenstand nach Fig. 2 in anderer Funktionsstellung.

Der in den Figuren dargestellte Beschickbehälter 1 ist für die Aufnahme von feinteiligem oder körnigem Beschickgut bestimmt. Das Beschickgut wird aus dem Beschickbehälter 1 einer nachgeordneten Kunststoff-Schneckenpresse zugeführt. Sie wird unten an den Auslauf des Beschickbehälters 1 angeschlossen. Zum grundsätzlichen Aufbau gehören
eine Befülleinrichtung 2,
ein trichterförmiger Behälterboden 3 und
Auslaufstutzen 3a am Behälterboden 3.

Die Befülleinrichtung 2 weist einerseits einen in den Beschickbehälterinnenraum einmündenden Befüllstutzen 4 und andererseits ein über einen Absaugstutzen 5 und eine Saugleitung 6 angeschlossenes Sauggebläse 7 auf. Die Anordnung ist so getroffen, daß vor dem Absaugstutzen 5 ein Filter 9 mit flexiblen Filterwänden 8 angeordnet ist und daß in Absaugrichtung hinter dem Absaugstutzen 5 ein Steuerventil 10 angeordnet ist, mit dem der Beschickbehälterinnenraum über die Saugleitung 6 an das Sauggebläse 7 oder bei 11 an die Atmosphäre anschließbar ist. Dabei ist bei Anschluß des Beschickbehälterinnenraumes an die Atmosphäre die Saugleitung 6 bei arbeitendem Sauggebläse 7 verschließbar.

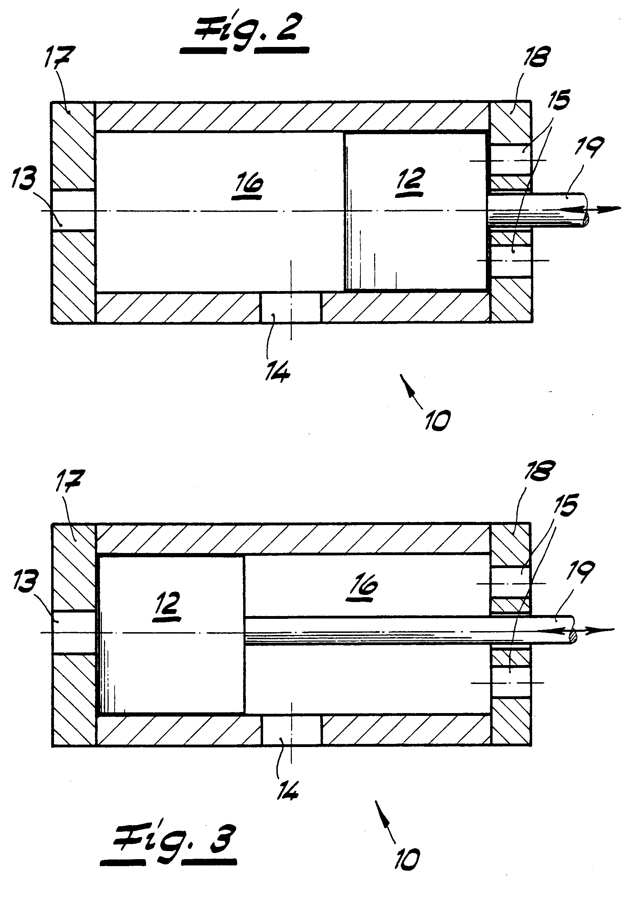

Wie im Ausführungsbeispiel das Steuerventil 10 im einzelnen gestaltet ist, ergibt sich aus den Fig. 2 und 3. In der Fig. 2 ist die Stellung des Steuerventils 10 gezeichnet, bei der der Kolbenschieber 12 die Bohrung 13 für die Saugleitung 6 sowie die Bohrung 14 für den Absaugstutzen 5 freigibt, die Atmosphärenbohrungen 15 aber verschließt. In der Fig. 3 ist umgekehrt die Bohrung 13 für die Saugleitung 6 verschlossen, während die Atmosphärenbohrungen 15 und die Bohrung 14 für den Absaugstutzen 5 frei sind. Das Steuerventil 10 besitzt einen Steuerventilzylinderraum 16, der einen sauggebläseraumseitigen Zylinderraumdeckel 17 mit zumindest einer Bohrung 13 für den Anschluß der Saugleitung 6 und einen gegenüberliegenden atmosphärenseitigen Zylinderraumdeckel 18 mit zumindest einer Atmospährenbohrung 15 aufweist. Der Zylinderraum 16 besitzt im Bereich seiner Mitte die Bohrung 14 für den Absaugstutzen 5. Im Steuerventilzylinderraum 16 befindet sich der Kolbenschieber 12 mit nach außen geführter Steuerstange 19, der in Absaugstellung die Bohrung 13 für die Saugleitung 6 sowie die Bohrung 14 für den Absaugstutzen 5 freigibt, die Belüftungsbohrungen 15 aber verschließt. Umgekehrt gibt in der Belüftungsstellung der Kolbenschieber 12 die Belüftungsbohrungen 15 und die Bohrung 14 für den Absaugstutzen 5 frei, während die Bohrung 13 für den Anschluß der Saugleitung 6 verschlossen ist.

## Patentansprüche

1. Beschickbehälter (1) für die Aufnahme von feinteiligem oder körnigem Beschickgut, das einer nachgeordneten Kunststoff-Schneckenpresse zugeführt wird, - mit
Befülleinrichtung (2),
trichterförmigem Behälterboden (3) und
Auslaufstutzen (3a) am Behälterboden (3),
wobei die Befülleinrichtung (2) einerseits einen in den Beschickbehälterinnenraum einmündenden Befüllstutzen (4) und andererseits ein über einen Absaugstutzen (5) und eine Saugleitung (6) angeschlossenes Sauggebläse (7) aufweist, **dadurch gekennzeichnet**, daß vor dem Absaugstutzen (5) ein Filter (9) mit flexiblen Filterwänden (8) angeordnet ist, wobei in Absaugrichtung hinter dem Absaugstutzen (5) ein Steuerventil (10) angeordnet ist, mit dem der Behälterinnenraum über die Saugleitung (6) entweder an das Sauggebläse (7) oder an die Atmosphäre anschließbar ist sowie bei Anschluß des Beschickbehälterinnenraumes an die Atmosphäre die Saugleitung (6) bei arbeitendem Sauggebläse (7) verschließbar ist, daß das Steuerventil (10) einen Steuerventilzylinderraum (16) und einen sauggebläseraumseitigen Zylinderraumdeckel (17) mit zumindest einer Bohrung (13) für den Anschluß der Saugleitung (6) und einen gegenüberliegenden atmosphärenseitigen Zylinderraumdeckel (18) mit zumindest einer Belüftungsbohrung (15) aufweist, daß fernerhin der Steuerzylinderraum (16) im Bereich seiner Mitte eine Bohrung (14) für den Absaugstutzen(5) aufweist und daß im Steuerventilzylinderraum (10) ein Kolbenschieber (12) mit nach außen geführter Steuerstange (19) geführt ist, der in Absaugstellung die Bohrung (13) für den Anschluß der Saugleitung (6) sowie die Bohrung (14) für den Absaugstutzen (5) freigibt und die Belüftungsbohrung (15) verschließt und der in Belüftungsstellung die Belüftungsbohrung (15) sowie die Bohrung (14) für den Absaugstutzen (5) freigibt und die Bohrung (13) für den Anschluß der Saugleitung (6) verschließt.

## Claims

1. A feeder vessel (1) for receiving finely divided or granular feed material which is fed to a plastics worm extruder disposed downstream, - having
a filling device (2),
a funnel-shaped vessel base (3), and
a discharge connection piece (3a) on the vessel base (3),
wherein the filling device (2) firstly has a filling connection piece (4) leading into the feeder vessel interior space and secondly has a suction fan (7) attached via a suction connection piece (5) and a suction line (6), characterised in that a filter (9) with flexible filter walls (8) is disposed in front of the suction connection piece (5), wherein a control valve (10) is disposed downstream of the suction connection piece (5) in the direction of suction, with which control valve the vessel interior space can be connected either to the suction fan (7) via the suction line (6) or to the atmosphere, and with which, when the feeder vessel interior space is connected to the atmosphere, the suction line (6) can be closed when the suction fan (7) is operating, that the control valve (10) has a control valve cylinder chamber (16) and a cylinder chamber cover (17) on the suction fan side of the chamber, which cylinder chamber cover has at least one port (13) for the connection of the suction line (6), and has an opposite cylinder chamber cover (18) on the atmosphere side which has at least one aeration port (15), that in addition the control cylinder chamber (16) has a port (14) in the region of its middle for the suction connection piece (5), and that a piston valve (12) having a control rod (19) which is led outwards is guided in the control valve cylinder chamber (10), wherein in the suction position the piston valve exposes the port (13) for the connection of the suction line (6) as well as the port (14) for the suction connection piece (5) and closes the aeration port (15), and in the aeration position it exposes the aeration port (15) as well as the port (14) for the suction connection piece (5) and closes the port (13) for the connection of the suction line (6).

## Revendications

1. Trémie d'alimentation (1) pour recevoir un produit en fines particules ou en grains oui est transmis à une extrudeuse de matières plastiques implantée en aval, comprenant un dispositif de remplissage (2), un fond de trémie en forme d'entonnoir (3) et une tubulure de sortie (3a) sur le fond (3) de la trémie, le dispositif de remplissage (2) comportant, d'une part, une tubulure de remplissage (4) qui débouche à l'intérieur de la trémie d'alimentation et, d'autre part, un ventilateur aspirant (7) relié par l'intermédiaire d'une tubulure d'aspiration (5) et d'une conduite d'aspiration (6), caractérisée en ce qu'en amont de la tubulure d'aspiration (5) est disposé un filtre (9) à parois souples (8), une valve de commande (10) étant disposée en aval de la tubulure d'aspiration (5) par rapport au sens d'aspiration et servant, par l'intermédiaire de la conduite d'aspiration (6), à mettre en communication l'intérieur de la trémie soit avec le ventilateur aspirant (7) soit avec l'atmosphère et, en cas de communication entre l'intérieur de la trémie d'alimentation et l'atmosphère, à fermer la conduite d'aspiration (6) pendant le fonctionnement du ventilateur aspirant (7), en ce que la valve de commande (10) comporte une chambre cylindrique de valve de commande (16) et un couvercle de chambre cylindrique (17) situé côté ventilateur aspirant et pourvu d'au moins un orifice (13) pour raccorder la conduite d'aspiration (6) et, en vis-à-vis, un couvercle de chambre cylindrique (18) situé côté atmosphère et pourvu d'au moins un trou de purge d'air (15), en ce qu'en outre la chambre cylindrique de commande (16) comporte un trou (14) pour la tubulure d'aspiration (5) dans la zone de son centre, et en ce que, dans la chambre cylindrique de valve de commande (10) est guidé un piston-tiroir (12) dont la tige de commande (19) sort à l'extérieur et qui, en position d'aspiration, ouvre le trou (13) de raccordement de la conduite d'aspiration (6) et le trou (14) pour la tubulure d'aspiration (5) et ferme le trou de purge d'air (15) et qui, en position de purge d'air, ouvre le trou de purge d'air (15) et le trou (14) pour la tubulure d'aspiration (5) et ferme le trou (13) de raccordement de la conduite d'aspiration (6).
